# EUROPÄISCHE PATENTANMELDUNG

(11) **EP 2 607 874 A2**
(43) Veröffentlichungstag der Anmeldung: **26.06.2013**
(21) Anmeldenummer: 12190584.8
(22) Anmeldetag: 30.10.2012
(51) Int. Cl.: G01L 5/00, G01M 13/04, F16C 19/52

(54) **Sensoreinrichtung zur Überwachung eines Wälzlagers**

(30) Priorität: 31.10.2011 DE 102011054967
(71) Anmelder: Deutsches Zentrum für Luft- und Raumfahrt e.V., 51147 Köln (DE)
(72) Erfinder: Abildgaard, Max, 38104 Braunschweig (DE); Mainz, Henning, 38102 Braunschweig (DE)
(74) Vertreter: Günther, Constantin

(57) **Zusammenfassung**

Die Erfindung betrifft eine Sensoreinrichtung (1) zur Überwachung eines Wälzlagers (2), wobei die Sensoreinrichtung (1) einen länglichen stabförmigen Bereich (3) aufweist, der an einem Ende (4) einen Kraftsensor (5) aufweist, der dazu eingerichtet ist, mit einem Lagerring (6, 7) des Wälzlagers (2) in Kontakt gebracht zu werden, und wobei die Sensoreinrichtung (1) an einer von dem Kraftsensor (5) entfernten Stelle einen Fixierungsbereich (8) aufweist, der zur Befestigung der Sensoreinrichtung (1) an einem Lagerbock (9) des Wälzlagers (2) oder einem mit dem Lagerbock (9) starr verbundenen Teil eingerichtet ist.

## Beschreibung

Die Erfindung betrifft eine Sensoreinrichtung zur Überwachung eines Wälzlagers gemäß dem Anspruch 1.

Insbesondere im Bereich großer, mit Wälzlagern versehener Maschinen, z.B. Generatoren und Windenergieanlagen, ist eine Überwachung der Wälzlager im laufenden Betrieb erwünscht, um mögliche Defekte, z.B. Pittings, frühzeitig zu erkennen und Wartungs- oder Reparaturmaßnahmen einzuleiten. Bisher wurden für die Wälzlagerüberwachung überwiegend Beschleunigungssensoren verwendet, die außen am Lager oder an einem Lagerbock angebracht sind und den erzeugten Körperschall aufnehmen. Allerdings ist mit Beschleunigungssensoren nur eine indirekte Überwachung des Wälzlagers möglich, da nicht direkt Defekte am Wälzlager erkannt werden können, sondern nur indirekt über die Körperschallauswertung ein Rückschluss auf Defekte erfolgen kann. Die Überwachungsergebnisse sind daher nicht immer zufrieden stellend. Manche Defekte werden gar nicht oder erst sehr spät erkannt.

Der Erfindung liegt die Aufgabe zugrunde, eine Sensoreinrichtung zur Überwachung eines Wälzlagers anzugeben, die eine verbesserte Früherkennung von Defekten an dem Wälzlager ermöglicht.

Diese Aufgabe wird gemäß Anspruch 1 gelöst durch eine Sensoreinrichtung zur Überwachung eines Wälzlagers, wobei die Sensoreinrichtung einen länglichen stabförmigen Bereich aufweist, der an einem Ende einen Kraftsensor aufweist, der dazu eingerichtet ist, mit einem Lagerring des Wälzlagers in Kontakt gebracht zu werden, und wobei die Sensoreinrichtung an einer von dem Kraftsensor entfernten Stelle einen Fixierungsbereich aufweist, der zur Befestigung der Sensoreinrichtung an einem Lagerbock des Wälzlagers oder einem mit dem Lagerbock starr verbundenen Teil eingerichtet ist. Erfindungsgemäß wird vorgeschlagen, die Sensoreinrichtung mit einem Kraftsensor auszubilden, der mit dem Lagerring eines Wälzlagers in Kontakt gebracht werden kann. Hierdurch ist eine viel direktere Auswertung des Verhaltens des Wälzlagers möglich als durch die bekannten Beschleunigungssensoren. Ein weiterer Vorteil ist, dass mit dem Kraftsensor auch sich langsam verändernde Signale zuverlässig erfasst und ausgewertet werden können. Der Kraftsensor eignet sich sowohl zur Erfassung niederfrequenter als auch hochfrequenter Signale, so dass ein großes Feldfrequenzspektrum von Signalen an dem Wälzlager aufgenommen werden kann und in die Überwachung einbezogen werden kann. Dies war mit bisherigen Beschleunigungssensoren nicht möglich, da diese keine ausreichende Signalstärke bei niedrigen Frequenzen, d.h. sich langsam verändernden Signalen, aufweisen. Die erfindungsgemäße Sensoreinrichtung eignet sich daher auch zur Überwachung von Wälzlagern, die mit relativ geringen Drehzahlen betrieben werden.

Durch die Verwendung eines Kraftsensors kann die Sensoreinrichtung zur Erfassung von Verformungen des Wälzlagers eingerichtet sein, selbst wenn es sich nur um sehr kleine Verformungen z.B. infolge von Pittings handelt.

Gemäß der Erfindung weist die Sensoreinrichtung ferner an einer von dem Kraftsensor entfernten Stelle einen Fixierungsbereich auf, der zur Befestigung der Sensoreinrichtung an einem Lagerbock des Wälzlagers einem anderen Teil, das mit dem Lagerbock starr verbunden ist, eingerichtet ist. Dies erlaubt eine einfache und schnelle Anbringung der Sensoreinrichtung bei vorhandenen Anlagen bzw. Wälzlagern. Vorhandene Anlagen können daher einfach und schnell mit einer erfindungsgemäßen Sensoreinrichtung nachgerüstet werden und damit zuverlässiger überwacht werden. Die Sensoreinrichtung kann dabei mittels ihres Fixierungsbereiches schnell an dem Lagerbock des Wälzlagers oder einem benachbarten Teil der Anlage angebracht werden. Hierzu kann vorgesehen sein, dass im Lagerbock eine Bohrung eingebracht wird, und die Sensoreinrichtung in die Bohrung eingesetzt wird und mit dem Fixierungsbereich am Lagerbock befestigt wird, z.B. eingeschraubt wird. Möglich ist auch eine Außenanbringung der Sensoreinrichtung an einer Außenoberfläche des Lagerbocks oder dem benachbarten Teil. In diesem Fall kann der Fixierungsbereich der Sensoreinrichtung z.B. mit einem Flansch an den Lagerbock oder dem benachbarten Teil angeschraubt werden, derart, dass der am Ende des länglichen stabförmigen Bereichs angeordnete Kraftsensor in Kontakt mit einem Lagerring des Wälzlagers kommt. Diese Art der Befestigung eignet sich insbesondere bei Wälzlagern, deren innerer oder äußerer Lagerring etwas aus dem Lagerbock heraussteht.

Ein Lagerbock ist dabei jede Art von Halterung für das Wälzlager.

Hierbei kann der Kraftsensor mit einem Lagerring des Wälzlagers in Kontakt gebracht werden, wobei wahlweise der innere Lagerring oder der äußere Lagerring verwendet werden kann. Der Kraftsensor kann dabei direkt oder indirekt mit einem Lagerring des Wälzlagers in Kontakt gebracht werden.

Die Erfindung eignet sich zur Überwachung aller Arten von Wälzlagern, insbesondere Kugellagern, Kegelrollenlagern, Zylinderrollenlagern und jeglichen anderen Arten von Wälzlagern.

Gemäß einer vorteilhaften Weiterbildung der Erfindung weist die Sensoreinrichtung an den Druckfederbereich auf, durch den Kraftsensor gegenüber dem Fixierungsbereich elastisch abgefedert ist. Der Druckfederbereich der Sensoreinrichtung hat den Vorteil, dass die Sensoreinrichtung mit einer gewissen Vorspannung an dem Lagerbock befestigt werden kann, so dass der Kraftsensor auch im unbewegten Zustand des Wälzlagers bereits einen gewissen Signalpegel abgibt. Dies ermöglicht es, mit dem Kraftsensor auch Verringerungen der auf den Kraftsensor einwirkenden Kraft bei einer Drehung des Wälzlagers zu erfassen, so dass eine Erfassung sowohl von Erhöhungen als auch von Verringerungen der auf den Kraftsensor einwirkenden Kräfte möglich ist. Der Druckfederbereich ist bezüglich der Federhärte auf die gewünschten Einsatzbedingungen abzustimmen, d.h. derart, dass der gewünschte Kraftbereich mit dem Kraftsensor erfasst werden kann.

Der Druckfederbereich ist dabei derart anzuordnen, dass er zwischen dem Kraftsensor und dem Fixierungsbereich wirksam ist. Der Druckfederbereich der Sensoreinrichtung kann z.B. zwischen dem Kraftsensor und dem Fixierungsbereich angeordnet sein. Der Druckfederbereich der Sensoreinrichtung kann z.B. durch einen Abschnitt der Sensoreinrichtung selbst gebildet werden, z.B. durch den länglichen stabförmigen Bereich, der eine gewisse materialbedingte Elastizität aufweist. Hierbei bildet das Material des länglichen stabförmigen Bereichs dann den Druckfederbereich.

Gemäß einer vorteilhaften Weiterbildung der Erfindung weist der Druckfederbereich ein separates Federbauteil auf, durch das die Sensoreinrichtung in jeweilige auf beiden Seiten des Federbauteils angeordnete Sensoreinrichtungsabschnitte unterteilt ist. Hiermit wird ein gesondertes Bauteil für den Druckfederbereich vorgeschlagen, nämlich ein Federbauteil, das z.B. als Spiralfeder oder Tellerfeder ausgebildet sein kann. Eine Tellerfeder hat den Vorteil, dass sie kurzbauend ist und somit eine insgesamt kurzbauende Sensoreinrichtung realisiert werden kann. Eine solche Sensoreinrichtung lässt sich günstig bei begrenzten Platzverhältnissen im Bereich von Wälzlagern einsetzen.

Das Federbauteil kann auch eine Anordnung aus mehreren Federn sein, z.B. ein Paket aus mehreren hintereinander angeordneten Tellerfedern oder mehreren nebeneinander angeordneten Spiralfedern oder Kombinationen daraus. Auch andere Arten von Druckfedern sind vorteilhaft einsetzbar.

Durch den Druckfederbereich und die Masse des länglichen stabförmigen Bereichs entsteht ein schwingungsfähiges System. Die Resonanzfrequenz des Systems kann auf die jeweilige Überwachungsaufgabe abgestimmt werden, d.h. die zu erwartenden Signalfrequenzen. Das Signal des Kraftsensors zeigt dabei das Verhalten, dass es bei Frequenzen unterhalb der Resonanzfrequenz eine flach verlaufende Amplitudenkurve aufweist, die oberhalb der Resonanzfrequenz mit steigender Frequenz ansteigt. Oberhalb der Resonanzfrequenz steigt somit die Empfindlichkeit des Kraftsensors mit zunehmender Frequenz an. Je nach gewünschtem Signalverlauf des Kraftsensors können unterschiedliche Ansätze für die Festlegung der Resonanzfrequenz gewählt werden:
1. Unterkritisches System: Wenn für den jeweiligen Anwendungsfall ein durchgehend flacher Amplitudenverlauf des Signals des Kraftsensors gewünscht ist, wird die Resonanzfrequenz so hoch gewählt, dass der gesamte zu erwartende Messbereich unterhalb der Resonanzfrequenz liegt.
2. Überkritisches System: Die Resonanzfrequenz kann auch so gewählt werden, dass der gesamte zu erwartende Messbereich darüber liegt. In diesem Fall besteht eine Abhängigkeit der Amplitude des Signals des Kraftsensors von der Frequenz dahingehend, dass die Sensitivität mit zunehmender Frequenz ansteigt.
3. Gemischtes System: In manchen Anwendungsfällen kann der gewünschte Messbereich so groß sein, dass es konstruktiv nicht möglich ist, die Resonanzfrequenz außerhalb des Messbereichs festzulegen. In diesem Fall kann, sofern ein Ansteigen der Sensitivität oberhalb der Resonanzfrequenz störend ist, die ansteigende Sensitivität z.B. durch eine entsprechende Funktion in einer Auswertesoftware kompensiert werden. Es kann auch eine entsprechende Dämpfung vorgesehen werden, wobei darauf zu achten ist, dass die Dämpfung nicht zu zu starken Verminderungen der Sensitivität in bestimmten Frequenzbereichen führt.

Gemäß einer vorteilhaften Weiterbildung der Erfindung sind die auf beiden Seiten des Federbauteils angeordneten Sensoreinrichtungsabschnitte über ein dazwischen angeordnetes nichtnewtonsches Fluid miteinander verbunden. Als nichtnewtonsches Fluid bezeichnet man im Gegensatz zum newtonschen Fluid ein Fluid, d.h. eine Flüssigkeit oder ein Gas, dessen Viskosität nicht konstant bleibt, wenn sich die einwirkenden Kräfte verändern. Damit entspricht ein solches Fluid nicht dem newtonschen Elementargesetz der Zähigkeitsreibung. Ein nichtnewtonsches Fluid hat thixotropische Eigenschaften, d.h. die Viskosität des Fluid sinkt mit steigender Dauer einer Krafteinwirkung. Bei kurzer Krafteinwirkung bleibt das Fluid relativ hart und steif, und bei längerer bzw. langsam ansteigender Krafteinwirkung wird es weich bzw. plastisch. Durch Anordnung des nichtnewtonschen Fluids zwischen den zwei Sensoreinrichtungsabschnitten wird erreicht, dass sich der Druckfederbereich bei hochfrequenten auf die Sensoreinrichtung einwirkenden Kraftänderungen sehr hart und steif verhält, während bei niederfrequenten Kraftänderungen das nichtnewtonsche Fluid diesen Änderungen folgt und eine gewünschte Längenadaption der Sensoreinrichtung eintreten kann. Die Sensoreinrichtung kann sich daher an Längenänderungen anpassen, die z.B. durch Temperaturschwankungen auftreten. Es wird erreicht, dass die Federung der Sensoreinrichtung weich genug ist, um eine mühelose Montage an dem Wälzlager zu ermöglichen, und gleichzeitig wird eine hohe Steifigkeit im Bereich höherer Frequenzen erreicht, z.B. oberhalb von 0,5 Hz. Als nichtnewtonsches Fluid kann z.B. Knetmasse verwendet werden, wie z.B. Remo Putty Pad.

Gemäß einer vorteilhaften Weiterbildung der Erfindung weist der Fixierungsbereich einen Gewindeabschnitt auf, z.B. ein Außengewinde, der zum Einschrauben in eine Bohrung eines Lagerbocks eines Wälzlagers eingerichtet ist. Die Bohrung ist vorteilhaft dann z.B. mit einem Innengewinde versehen. Dies erlaubt eine einfache und schnelle Befestigung der Sensoreinrichtung an dem Lagerbock des Wälzlagers.

Als Kraftsensor können grundsätzlich alle Kraftsensortechnologien verwendet werden. Vorteilhaft sind insbesondere Ausführungen des Kraftsensors als piezoelektrischer Sensor oder piezoresistiver Sensor. Solche Sensorelemente können kompakt und preisgünstig realisiert werden und weisen eine hohe Empfindlichkeit auf, so dass die Signale auch einfach ausgewertet werden können.

Gemäß einer vorteilhaften Weiterbildung der Erfindung ist der Kraftsensor als piezoresistiver Dünnschichtsensor ausgebildet, der eine Sensorschicht aus einem piezoresistiven Material, das mit dotiertem oder undotiertem Kohlenwasserstoff oder reinem Kohlenstoff hergestellt ist, und eine auf der Sensorschicht angeordnete Kraftsensorfläche aufweist. Dies erlaubt eine kompakte, platzsparende Ausführung des Kraftsensors sozusagen an der Spitze der Sensoreinrichtung. Die Auswertung des Signals des Kraftsensors kann auf einfache Weise erfolgen, indem eine Widerstandsmessung hinsichtlich der Widerstandsänderung des piezoresistiven Materials durchgeführt wird, das dieses aufgrund einer auf die Kraftsensorfläche ausgeübten Kraft ausführt. Eine solche Widerstandsmessung hat den Vorteil, dass sie mit einfachen und kostengünstigen technischen Mitteln realisiert werden kann. Als Dotierungsmaterialien kommen beispielsweise Metalle, wie Wolfram, Chrom, Silber, Titan, Gold, Platin etc. in Frage. Als Material für die Sensorschicht sind auch reine oder amorphe Kohlenstoffschichten möglich.

Gemäß einer vorteilhaften Weiterbildung der Erfindung ist zumindest auf die Kraftsensorfläche wenigstens eine Verschleißschutzschicht aufgebracht. Hierdurch wird die Kraftsensorfläche dauerhafter haltbar, was der Lebensdauer der Sensoreinrichtung zugute kommt. Die Verschleißschutzschicht kann auch z.B. die gesamte Spitze der Sensoreinrichtung überdecken. Die Sensoreinrichtung kann daher auch in rauen Umgebungsbedingungen eingesetzt werden. Als Verschleißschutzschicht kann z.B. eine siliziumdotierte Kohlenwasserstoffschicht oder Silizium-Sauerstoff-, Aluminiumoxid oder Aluminiumnitrid-dotierte Kohlenwasserstoffschicht vorgesehen sein.

Gemäß einer vorteilhaften Weiterbildung der Erfindung ist an dem Ende des länglichen stabförmigen Bereichs, in dem der Kraftsensor angeordnet ist, zusätzlich ein Temperatursensor angeordnet. Dies hat den Vorteil, dass in dem Bereich, in dem der Kraftsensor vorgesehen ist, zusätzlich die Temperatur erfasst werden kann, so dass eine Temperaturkompensation des vom Kraftsensor abgegebenen Signals realisiert werden kann. Als Temperatursensor kann grundsätzlich jede Art von Temperatursensor vorgesehen sein. In einer vorteilhaften Ausgestaltung weist der Temperatursensor eine Temperatursensorfläche auf, die neben der Kraftsensorfläche auf der Sensorschicht angeordnet ist. Dies erlaubt eine besonders kompakte und kostengünstige Ausführung des Temperatursensors. Vorteilhaft ist die Temperatursensorfläche dabei in einem nicht von der mit der Sensoreinrichtung zu messenden Kraft beaufschlagten Bereich der Sensorschicht angeordnet. Das Ende des länglichen stabförmigen Bereichs kann z.B. konvex ausgebildet sein, und im Bereich der größten Erhebung des konvexen Bereichs kann die Kraftsensorfläche angeordnet sein. In einem umgebenden Bereich kann die Temperatursensorfläche angeordnet sein. Z.B. kann die Temperatursensorfläche eine ringförmige Struktur aufweisen, die die Kraftsensorfläche wenigstens zum Teil umgibt. Die Temperatursensorfläche liegt damit nicht im Kraftfluss, erfährt aber zumindest näherungsweise die gleiche Temperatur wie die Kraftsensorfläche.

Die Kraftsensorfläche und/oder die Temperatursensorfläche können z.B. als strukturierte Elektroden aus elektrisch leitfähigem Material, z.B. Kupfer, ausgeführt sein.

Die Temperaturkompensation des Kraftsensorsignals kann durch zusätzliche Erfassung des Temperatursensorsignals erfolgen, z.B. in einer elektronischen Auswerteeinrichtung durch entsprechende Berechnung eines temperaturkompensierten Kraftsensorsignals. Vorteilhaft kann auch eine rein hardwaremäßige Temperaturkompensation realisiert werden, indem der Kraftsensor und der Temperatursensor als halbe Messbrücke geschaltet werden und zwei weitere Messwiderstände als weitere halbe Messbrücke damit verbunden werden. Hiermit kann eine selbsttätig temperaturkompensierende Schaltung realisiert werden.

Die Sensorschicht ist hierbei auf ein irgendwie geartetes Substrat aufzubringen. Als Substrat kann z.B. direkt eine Oberfläche des länglichen stabförmigen Bereichs der Sensoreinrichtung dienen. Vorteilhaft ist das Substrat aus einem elektrisch leitendem Material gebildet oder ist zumindest in dem Bereich, in dem die Sensorschicht aufgebracht ist, mit einer elektrisch leitenden Beschichtung versehen. Der Kraftsensor wird dann durch die Kraftsensorfläche, den darunter angeordneten Bereich der Sensorschicht sowie den elektrischen Kontakt des Substrats gebildet. Hierdurch hat der Kraftsensor zwei elektrische Anschlüsse, nämlich die Kraftsensorfläche sowie die elektrisch leitende Schicht des Substrats. Zur Erfassung eines Kraftsignals sind die beiden elektrischen Anschlüsse mit einer Widerstandsmessschaltung zu verbinden. Der gemessene Widerstand gibt dann die auf den Kraftsensor einwirkende Kraft an. Je höher die einwirkende Kraft ist, desto geringer ist der gemessene Widerstand.

Gemäß einer vorteilhaften Weiterbildung der Erfindung weist die Sensoreinrichtung wenigstens im Bereich des Endes des länglichen stabförmigen Bereichs, in dem der Kraftsensor angeordnet ist, eine in Längsrichtung des länglichen stabförmigen Bereichs verlaufende Aussparung auf, durch die elektrische Kontaktierungsleitungen zu dem Kraftsensor geführt sind. Durch die Aussparung können zusätzlich auch elektrische Kontaktierungsleitungen zu dem Temperatursensor geführt sein. Dies hat den Vorteil, dass die elektrischen Kontaktierungsleitungen geschützt vom Ende des länglichen stabförmigen Bereichs zu anderen Bereichen der Sensoreinrichtung, z.B. zum Fixierungsbereich, geführt werden, so dass die Sensoreinrichtung von außen her elektrisch kontaktierbar ist. Die elektrischen Kontaktierungsleitungen können in der Aussparung z.B. durch Verkleben oder Vergießen fixiert sein. Hierdurch werden die elektrischen Kontaktierungsleitungen vibrationsfest und damit resistent gegenüber Kabelbrüchen.

Die Erfindung wird nachfolgend anhand von Ausführungsbeispielen unter Verwendung von Zeichnungen näher erläutert. Es zeigen
- Figur 1 -: eine ausschnittsweise Darstellung eines in einem Lagerbock angeordneten Wälzlagers sowie eine Sensoreinrichtung und
- Figur 2 -: eine Sensoreinrichtung in perspektivischer Darstellung und
- Figur 3 -: eine weitere Ausführungsform einer Sensoreinrichtung in Schnittdarstellung und
- Figur 4 -: einen Ausschnitt der Sensoreinrichtungen gemäß den Figuren 2 und 3.

In den Figuren werden gleiche Bezugszeichen für einander entsprechende Elemente verwendet.

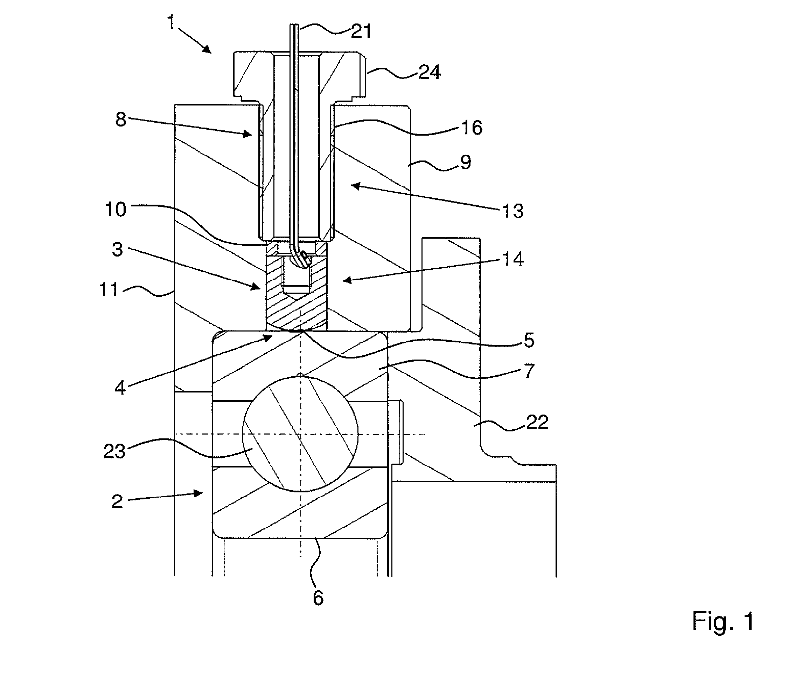

Die Figur 1 zeigt ausschnittsweise ein Wälzlager 2, das in einem Lagerbock 9 angeordnet ist. Der Lagerbock 9 ist mit einem weiteren Maschinenelement 22 verbunden. Das Wälzlager 2 weist einen inneren Lagerring 6 und einen äußeren Lagerring 7 auf. Zwischen dem inneren Lagerring 6 und dem äußeren Lagerring 7 sind Wälzkörper 23 angeordnet, z.B. Kugeln. Ferner ist eine Sensoreinrichtung 1 dargestellt, die in einer mit einem Innengewinde versehenen Bohrung des Lagerbocks 9 eingeschraubt ist. Die Sensoreinrichtung 1 weist einen Fixierungsbereich 8 auf, der mit einem Außengewinde 16 versehen ist. Der Fixierungsbereich 8 ist mit einem Handhabungsmittel 24 verbunden, mit dem die Sensoreinrichtung 1 mit einer gewünschten Vorspannung in die Bohrung des Lagerbocks 9 eingeschraubt werden kann. Das Handhabungsmittel 24 kann z.B. als Schraubenkopf ausgebildet sein, z.B. mit einem Sechskant zum Ansetzen eines Schraubenschlüssels.

Die Sensoreinrichtung 1 weist ferner einen länglichen stabförmigen Bereich 3 auf, der an einem Ende 4 einen Kraftsensor 5 aufweist. Der Kraftsensor 5 ist in direktem Kontakt mit dem äußeren Lagerring 7 des Wälzlagers 2.

Der Kraftsensor 5 ist über einen Druckfederbereich 10 gegenüber dem Fixierungsbereich 8 abgefedert. Der Druckfederbereich 10 kann z.B. in Form einer elastischen Druckscheibe zwischen dem mit dem Außengewinde 16 versehenen Fixierungsbereich 8 und dem länglichen stabförmigen Bereich 3 angeordnet sein. Durch den Druckfederbereich 10 ist die Sensoreinrichtung 1 in jeweilige auf beiden Seiten des Druckfederbereiches angeordnete Sensoreinrichtungsabschnitte 13, 14 unterteilt.

Der Kraftsensor 5 und gegebenenfalls ein Temperatursensor sind über elektrische Kontaktierungsleitungen 21 mit einer externen Signalerfassungseinrichtung verbunden.

Je nach Anwendungsfall kann die Sensoreinrichtung 1 auch an einer Außenoberfläche 11 des Lagerbocks 9 angebracht sein.

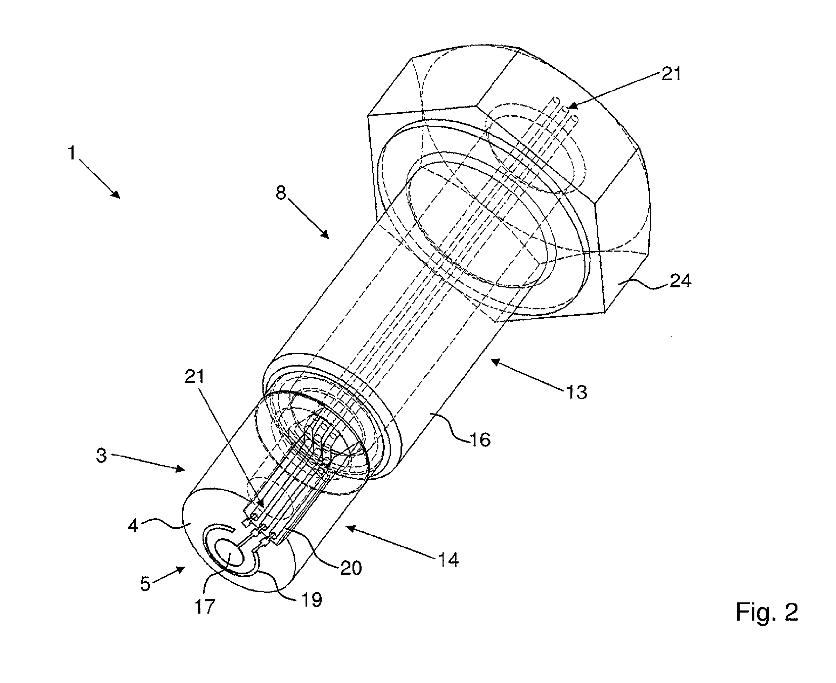

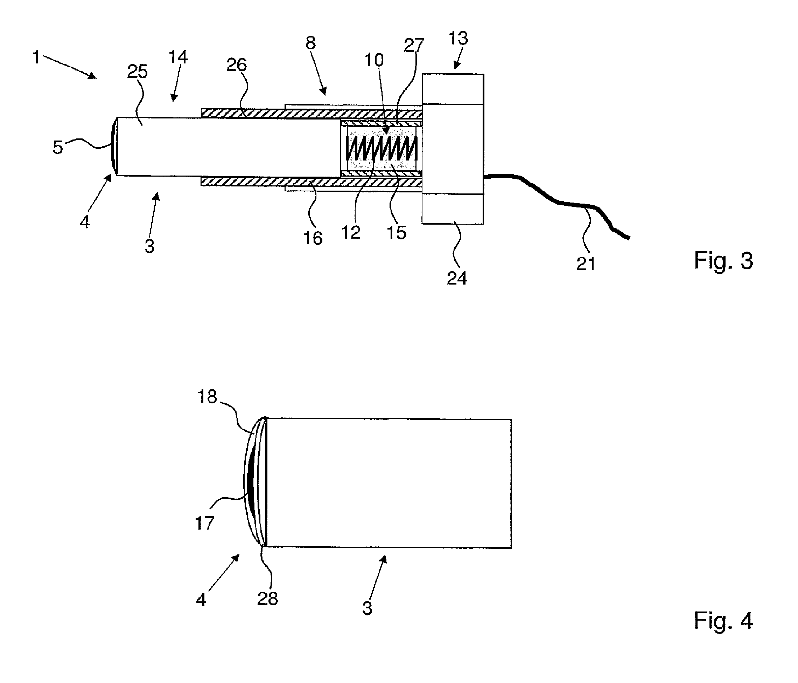

Die Figur 2 zeigt die Sensoreinrichtung 1 gemäß Figur 1 in einer isometrischen Ansicht, wobei mit gestrichelten Linien nicht sichtbare Elemente dargestellt sind. Wie in Figur 2 erkennbar ist und auch in Figur 1 bereits dargestellt ist, ist das Ende 4 des länglichen stabförmigen Bereichs 3 konvex geformt, z.B. kreisabschnittsförmig oder oval. Etwa zentral auf dieser konvexen Oberfläche ist zur Realisierung des Kraftsensors 5 eine Kraftsensorfläche 17 in Form einer elektrisch leitenden Schicht angeordnet. Die Kraftsensorfläche 17 ist zumindest teilweise umgeben von einer etwa ringförmigen Temperatursensorfläche 19, die ebenfalls als elektrisch leitende Schicht auf die konvexe Oberfläche aufgebracht ist. Die Kraftsensorfläche 17 und die Temperatursensorfläche 19 sind über elektrische Anschlussleitungen 21, die in einer in Längsrichtung des länglichen stabförmigen Bereichs 3 verlaufenden Aussparung 20 angeordnet sind, elektrisch kontaktiert. Eine dritte elektrische Anschlussleitung, die in der Figur 2 dargestellt ist, dient zur Kontaktierung eines Substrats. Die Einzelheiten des Sensoraufbaus sind werden noch anhand der in Figur 4 näher erläutert.

Die Figur 3 zeigt eine weitere Ausführungsform der Sensoreinrichtung 1, bei der der längliche stabförmige Bereich 3 als in einem Hohlkörper 26 längsverschieblicher Kolben 25 ausgebildet ist. Der Kolben 25 ist über einen Druckfederbereich 10 gegenüber dem Fixierungsbereich 8 bzw. dem mit dem Fixierungsbereich 8 verbundenen Handhabungsmittel 24 abgefedert. Der Druckfederbereich 10 weist als separates Federbauteil eine Druckfeder 12 auf. Die Druckfeder 12 ist von einem nichtnewtonschen Fluid 15 umgeben, das zwischen dem Kolben 25 und dem Handhabungsmittel 24 angeordnet ist. Das nichtnewtonsche Fluid 15 ist von einem elastischen Schlauchstück 27 umgeben, das dafür sorgt, dass das nichtnewtonsche Fluid einerseits seine Position beibehält und nicht wegfließt, andererseits aber gewisse Formänderungen durchführen kann.

Die Figur 4 zeigt das Ende 4 des länglichen stabförmigen Bereichs 3 der Sensoreinrichtung gemäß den Figuren 1 bis 3. Der Kraftsensor bzw. auch der Temperatursensor sind jeweils als piezoresistive Dünnschichtsensoren ausgebildet. Hierfür ist auf ein Substrat, das z.B. aus dem länglichen stabförmigen Bereich 3 gebildet werden kann, eine Sensorschicht 28 aus einem piezoresistiven Material, das mit dotiertem oder undotiertem Kohlenwasserstoff oder reinem Kohlenstoff hergestellt ist, aufgebracht. Auf die Sensorschicht 28 ist wiederum die Kraftsensorfläche 17 sowie, wie in der Figur 2 ersichtlich, die Temperatursensorfläche 19 aufgebracht. Hierauf ist schließlich eine Verschleißschutzschicht 18 aufgebracht.

## Patentansprüche

1. Sensoreinrichtung (1) zur Überwachung eines Wälzlagers (2), wobei die Sensoreinrichtung (1) einen länglichen stabförmigen Bereich (3) aufweist, der an einem Ende (4) einen Kraftsensor (5) aufweist, der dazu eingerichtet ist, mit einem Lagerring (6, 7) des Wälzlagers (2) in Kontakt gebracht zu werden, und wobei die Sensoreinrichtung (1) an einer von dem Kraftsensor (5) entfernten Stelle einen Fixierungsbereich (8) aufweist, der zur Befestigung der Sensoreinrichtung (1) an einem Lagerbock (9) des Wälzlagers (2) oder einem mit dem Lagerbock (9) starr verbundenen Teil eingerichtet ist.

2. Sensoreinrichtung nach Anspruch 1, **dadurch gekennzeichnet, dass** der Fixierungsbereich (8) zur Befestigung des Sensoreinrichtung (1) in einer Bohrung des Lagerbocks (9) oder an einer Außenoberfläche (11) des Lagerbocks (9) eingerichtet ist.

3. Sensoreinrichtung nach einem der vorhergehenden Ansprüche, **dadurch gekennzeichnet, dass** die Sensoreinrichtung (1) einen Druckfederbereich (10) aufweist, durch den der Kraftsensor (5) gegenüber dem Fixierungsbereich (8) elastisch abgefedert ist.

4. Sensoreinrichtung nach Anspruch 3, **dadurch gekennzeichnet, dass** der Druckfederbereich (10) ein separates Federbauteil (12) aufweist, durch das die Sensoreinrichtung (1) in jeweilige auf beiden Seiten des Federbauteils (12) angeordnete Sensoreinrichtungsabschnitte (13, 14) unterteilt ist.

5. Sensoreinrichtung nach Anspruch 4, **dadurch gekennzeichnet, dass** die auf beiden Seiten des Federbauteils (12) angeordneten Sensoreinrichtungsabschnitte (13, 14) über ein dazwischen angeordnetes nichtnewtonsches Fluid (15) miteinander verbunden sind.

6. Sensoreinrichtung nach einem der Ansprüche 3 bis 5, **dadurch gekennzeichnet, dass** der Druckfederbereich (10) als Tellerfeder ausgebildet ist oder wenigstens eine Tellerfeder aufweist.

7. Sensoreinrichtung nach einem der vorhergehenden Ansprüche, **dadurch gekennzeichnet, dass** der Fixierungsbereich (8) einen Gewindeabschnitt (16) aufweist, der zum Einschrauben in eine Bohrung eines Lagerbocks (9) eines Wälzlagers (2) eingerichtet ist.

8. Sensoreinrichtung nach einem der vorhergehenden Ansprüche, **dadurch gekennzeichnet, dass** der Kraftsensor (5) als piezoelektrischer Sensor oder piezoresistiver Sensor ausgebildet ist.

9. Sensoreinrichtung nach einem der vorhergehenden Ansprüche, **dadurch gekennzeichnet, dass** der Kraftsensor (5) als piezoresistiver Dünnschichtsensor ausgebildet ist, der eine Sensorschicht (28) aus einem piezoresistiven Material, das mit dotiertem oder undotiertem Kohlenwasserstoff oder reinem Kohlenstoff hergestellt ist, und eine auf der Sensorschicht (28) angeordnete Kraftsensorfläche (17) aufweist.

10. Sensoreinrichtung nach Anspruch 9, **dadurch gekennzeichnet, dass** auf die Kraftsensorfläche (17) wenigstens eine Verschleißschutzschicht (18) aufgebracht ist.

11. Sensoreinrichtung nach einem der vorhergehenden Ansprüche, **dadurch gekennzeichnet, dass** an dem Ende (4) des länglichen stabförmigen Bereichs (3), an dem der Kraftsensor (5) angeordnet ist, zusätzlich ein Temperatursensor (19) angeordnet ist.

12. Sensoreinrichtung nach einem der vorhergehenden Ansprüche, **dadurch gekennzeichnet, dass** die Sensoreinrichtung (1) wenigstens im Bereich des Endes (4) des länglichen stabförmigen Bereichs (3), an dem der Kraftsensor (5) angeordnet ist, eine in Längsrichtung des länglichen stabförmigen Bereichs (3) verlaufende Aussparung (20) aufweist, durch die elektrische Kontaktierungsleitungen (21) zu dem Kraftsensor (5) geführt sind.
